Europäisches Patentamt

European Patent Office

Office européen des brevets

(11) Publication number: **0 190 930**
**A2**

# EUROPEAN PATENT APPLICATION

(21) Application number: **86300784.5**

(22) Date of filing: **05.02.86**

(51) Int. Cl.⁴: **H 01 F 27/34**
**H 01 F 27/36**

(30) Priority: **06.02.85 US 698983**

(43) Date of publication of application:
**13.08.86 Bulletin 86/33**

(84) Designated Contracting States:
**AT BE CH DE FR GB IT LI LU NL SE**

(71) Applicant: **KUHLMAN CORPORATION**
**2565 West Maple Road**
**Troy Michigan 48084(US)**

(72) Inventor: **Schlake, Randall L.**
**1712 Appomattox Drive**
**Lexington Kentucky 40504(US)**

(72) Inventor: **Fisher, John L.**
**1040 Maywick Drive**
**Lexington Kentucky 40504(US)**

(74) Representative: **Bowman, Paul Alan et al,**
**LLOYD WISE, TREGEAR & CO. Norman House 105-109**
**Strand**
**London WC2R OAE(GB)**

(54) Transient voltage protection for toroidal transformer.

(57) An apparatus and method for protecting a toroidal transformer from damage due to voltage oscillations and dielectric stresses caused by applied voltage transients is disclosed. Two conductive sheilds are each electrically coupled to a line lead of the primary windings of the toroidal transformer and are disposed around and insulated from the periphery of one semitoroidal segment of the primary windings. A conductive grounding plate is strapped to the outside of the transformer adjacent to and insulated from each conductive shield.

0190930

9239-27/A060A/KKKKK4

## TRANSIENT VOLTAGE PROTECTION FOR TOROIDAL TRANSFORMER

### BACKGROUND OF THE INVENTION

The present invention constitutes both improvements to and additional inventions over the inventions disclosed in my co-pending application Serial No. 337,356, filed January 6, 1982, entitled "Toroidal Electrical Transformer and Method for Making Same," and the further co-pending applications, Serial No. 662,312, filed October 17, 1984, entitled "Apparatus and Method for Fabricating a Low Voltage Winding for a Toroidal Transformer," Serial No. 662,467, filed October 17, 1984, entitled "Apparatus and Method for Fabricating a High Voltage Winding for a Toroidal Transformer," and Serial No. 662,330, filed October 17, 1984, entitled "Apparatus and Method for Winding a Magnetic Core for a Toroidal Transformer." The entirety of the disclosures of said co-pending Applications are incorporated herein by reference thereto.

### SUMMARY OF THE INVENTION

In general, this application and the aforementioned co-pending applications are directed to new toroidal transformer designs and construction apparatus and methods which improve the efficiency of electrical transformers. The present invention differs from the inventions of the co-pending applications in a number of significant respects. Specifically, the present invention provides an apparatus and method for protecting a toroidal transformer from damage due to voltage oscillations and dielectric stresses caused by applied voltage transients which may occur, for example, from lightning striking the transformer or its connected electrical lines.

2          **0190930**

According to the specific embodiment disclosed herein, the present invention provides a conductive shield electrically coupled to a line lead of the toroidal transformer and wrapped around and insulated from the periphery of the toroidal transformer by an insulating barrier. Where the toroidal transformer has two semitoroidal segments of primary windings connected in series and surrounding the secondary windings and the core of the toroidal transformer, the present invention includes two conductive shields each electrically coupled to the line lead of its related semitoroidal segment of the primary winding and disposed around and insulated from the periphery of that semitoroidal segment of the primary winding to which the conductive shield is connected.

An applied voltage transient can damage the windings by breaking down insulation barriers and arcing to ground. As an alternative to the present invention, the insulation thickness on the wires of the primary windings can be increased to provide improved protection against voltage transients, such protection decreases transformer performance due to the resultant decrease in electrical conductor fill density in the primary windings. The present invention provides protection against voltage transients by providing an alternative path for the energy of the voltage transients, without compromising the transient voltage withstand strength of the toroidal transformer or requiring that the transformer size be increased to accommodate increased insulation thickness on the wires, which would reduce its power transformation efficiency.

The features and advantages of the products, methods and machines described in the specification are not all-inclusive, many additional features and advantages being apparent to one of ordinary skill in the art in view of the drawings, specification and claims hereof. Moreover, it should be noted that the language used in the specification has been principally selected
for readability and instructional purposes, and may not
have been selected to delineate or circumscribe the
inventive subject matter, resort to the claims being
necessary to determine such inventive subject matter.

BRIEF DESCRIPTION OF THE FIGURES

Figure 1 is a perspective view, partially
cutaway, of a toroidal electrical transformer having
installed thereon a preferred transient voltage protection apparatus according to the present invention.

Figure 2 is a top plan view, partially cutaway, of the toroidal transformer and transient voltage
protection apparatus.

Figure 3 is a side elevation sectional view
of the toroidal transformer and transient protection
apparatus.

Figure 4 is a schematic diagram of an idealized circuit model of an electrical distribution transformer.

Figure 5 is a schematic diagram of an idealized circuit model of an electrical distribution transformer with an attached shield for transient voltage
protection.

Figure 6 is a schematic diagram of an idealized circuit model of a toroidal electrical transformer
having two series windings with two attached shields
for transient voltage protection.

DESCRIPTION OF THE SPECIFIC EMBODIMENTS

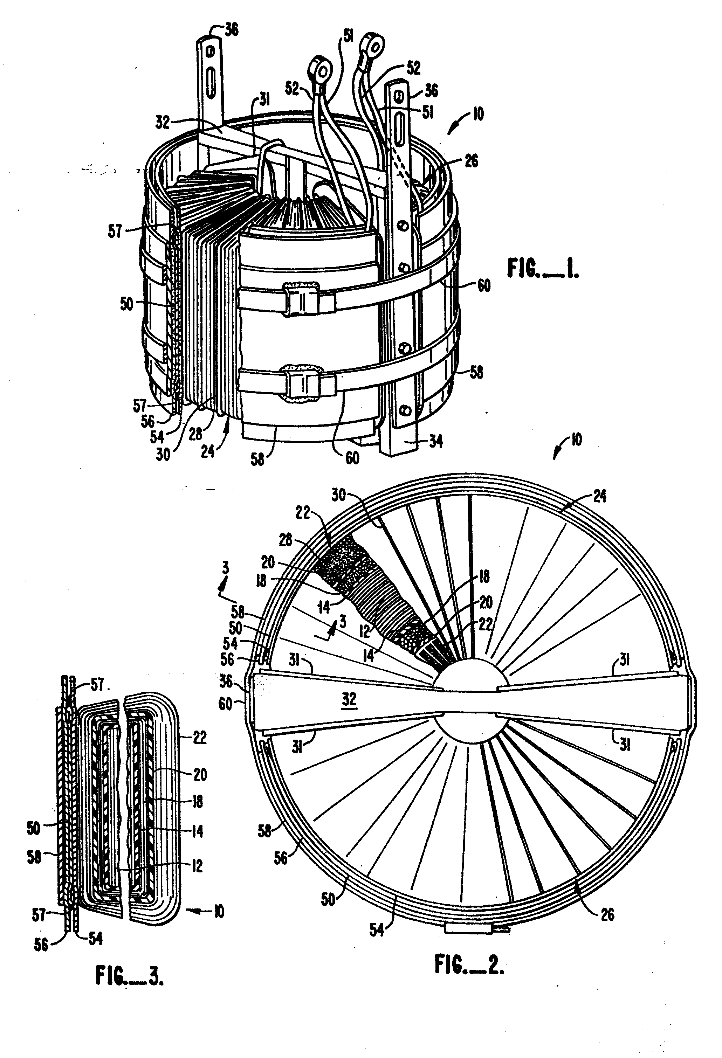

Figures 1, 2, and 3 illustrate a toroidal
electrical transformer 10 including a toroidal-shaped
magnetic core 12 disposed within a core insulation tube
14. A secondary coil or winding 18 surrounds the core
insulation tube 14 and is encased by a primary/secondary
insulation barrier 20, which is in turn surrounded by a
primary coil or winding 22. The toroidal transformer 10 is preferably composed of two substantially semitoroidal sections 24 and 26, each containing substantially semitoroidal segments of the core insulation tube 14, the secondary winding 18, the primary/secondary insulation barrier 20, and the primary winding 22, each forming an arc of about 165 degrees, with the toroidal magnetic core 12 wound inside of the combined semitoroidal sections 24 and 26. The primary winding 22 is preferably the high voltage winding of a step down transformer, while the secondary winding 18 is preferably the low voltage winding of such a transformer.

Each semitoroidal segment of the primary winding 22 includes a plurality of pie or wedge shaped bundles or coils 28 continuously wound from insulated wire and connected by loops of said wire. At one end of the two semitoroidal segments of the primary winding 22, each semitoroidal segment is electrically connected to a line lead 52, and at the other end, the two semitoroidal segments are electrically connected in series. The coils 28 lying proximate the line leads 52 are preferably separated by insulating inserts or collars 30 for purposes of resisting impulse stresses resulting from any non-linear voltage distribution to which the primary winding 22 may be subjected, such as those encountered during high voltage impulses caused, for example, by lightning. Additionally, in toroidal transformer designs which may have transient voltage stresses between coil bundles 28 greater than the dielectric withstand strength of the primary conductor insulation, inserts 30 may also be employed between the remaining coils 28, with those coils 28 lying proximate the line leads 52 insulated with inserts 30 of the same or greater thickness or with multiple inserts 30. The inserts 30 include a radial flange separating the adjacent coils of the primary winding 22 and are preferably composed of a moldable paper board, Kraft paper or a synthetic insulator material, such as "MYLAR" or "KAPTON". Similarly, the preferred secondary winding 18 is also made up of two substantially semitoroidal segments. Also, the core insulation tube 14 and the primary/secondary insulation barrier 20 with end flanges 31 are preferably formed in two semitoroidal segments each extending circumferentially through an arc of approximately 165 degrees. Wedge-shaped support blocks 32 and 34 are installed between and support the semitoroidal sections 24 and 26 and are secured by anchor straps 36.

The transient voltage protection apparatus of the present invention is installed externally to the toroidal transformer, and includes two conductive shields 50 each electrically coupled via a wire 51 to a line lead 52 of the primary windings 22 and disposed around and insulated from the periphery of the semitoroidal segment of primary winding to which it is coupled. Since the shields 50 are electrically connected to the line leads of the primary winding 22 and thus are charged to the voltage applied thereto, the shields are internally insulated from the periphery of the primary winding 22 by a coil surface insulating barrier 54, and are externally insulated by a shield surface insulating barrier 56. Preferably, the insulating barriers 54 and 56 are preapplied to the shield 50 so that the shield 50 and the insulating barriers 54 and 56 can be installed as a unit. Each of the insulating barriers 54 and 56 preferably extends past the perimeter of the shield 50 to avoid failure due to creepage around the insulating barriers, and is composed of Kraft paper or other electrical insulator material. Also, the shield 50 is preferably cuffed or folded at the edges 57 and at the corners to reduce voltage concentrations, and is composed of a thin sheet of metal such as, for example, .001 to .005 inch thickness copper or aluminum foil.

Each shield 50 preferably substantially covers the radially outside periphery of one semitoroidal segment of the primary winding 22, but could alternatively extend over substantially the entire periphery of the semitoroidal segment including top, bottom, and radially inside surfaces. The shield 50 and insulating barriers 54 and 56 are held in place against each semitoroidal segment of the primary windings 22 by a grounding plate 58, which is in turn secured by metal banding straps 60. The banding straps effectively ground the grounding plates 58 to the anchor straps 36 and through the transformer tank to the ground terminal of the toroidal transformer 10. The grounding plates 58 additionally protect the shield 50 and insulation barriers 54 and 56 from damage in handling, and in combination with the banding straps 60, improves the mechanical stability of the toroidal transformer 10 in handling and in resisting mechanical loads due to transient fault conditions.

While the benefits of the invention can be obtained without a thorough appreciation of the theory underlying the benefits obtained by the present invention, an explanation of the theory by which these benefits are obtained is nonetheless presented below. However, it should be understood that, although the following discussion represents Applicants' present best understanding of the theory, different or more sophisticated explanations may also appropriately describe the theory. Consequently, Applicants do not wish their invention to be limited by or dependent upon this or any other explanation of the theory underlying the benefits of the present invention.

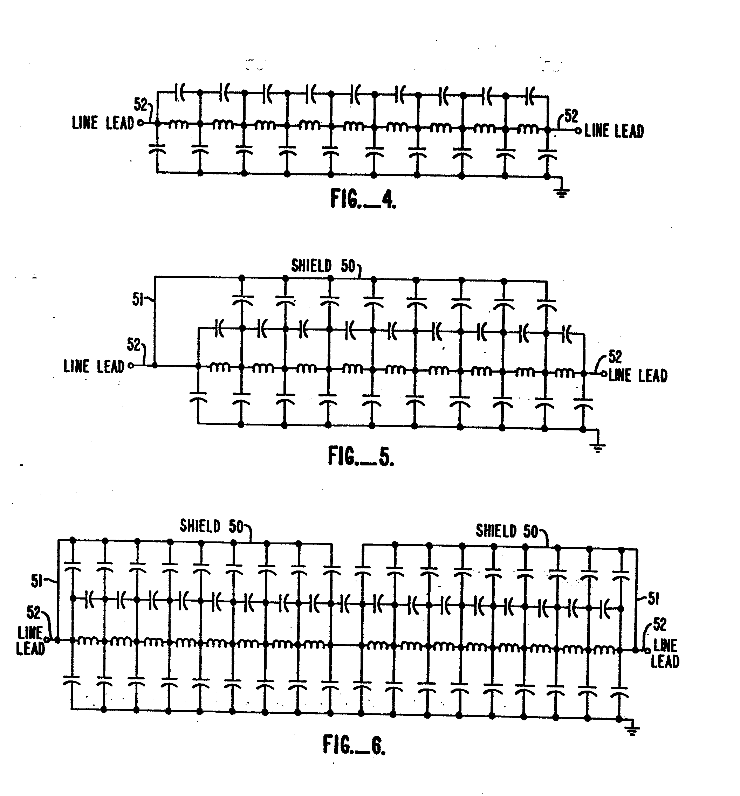

Figure 4 presents an idealized circuit model of an electrical distribution transformer. The circuit model includes coils 28 linked in a series inductance which models the magnetic coupling of both the primary and secondary windings 22 and 18 as seen from the primary winding 22. Each coil 28 is also capacitively coupled to other coils 28 and to the electrically grounded structures in the transformer. In theory, this capacitive coupling may be modeled by a distributed series capacitance and a distributed ground capacitance. Thus, the complete winding may be theoretically modeled by the distributed capacitive and inductive network shown in Figure 4.

The inductive and capacitive portions of the network do not tend to establish the same voltage distribution during transient conditions. Nor are they equally effective at all instants of time. If the impressed voltage is a step or rectangular wave, the initial voltage distribution will be a non-linear, capacitive one. Eventually, the inductive network will dominate, resulting in a linear voltage distribution throughout the winding. The transition from one to the other takes place through a damped oscillation involving a series of harmonics. These oscillations are recognized as standing waves, and this theory is known as the standing wave theory.

The voltage distribution throughout the winding is governed by the decaying harmonic oscillations. The voltage differentials between adjacent wire turns in each coil 28 and between adjacent coils 28 can severely stress the insulative components of the transformer winding. In general, as the initial non-linear capacitive voltage distribution nears the final linear inductive distribution, the magnitudes of the harmonic standing waves are reduced resulting in less severe voltage differentials. If a linear capacitive distribution could be achieved, the transient voltage oscillations could be eliminated.

Figure 5 presents the idealized theoretical circuit model of the transformer, including the conductive shield 50, which is electrically connected to the line lead 52 and maintained at the voltage of the line lead. This provides a path for capacitive currents to flow from the shield 50 to the primary winding 22 and from there to the effectively grounded secondary winding 18. Thus, the initial non-linear voltage distribution

0190930

is leveled through the majority of the primary winding 22. This more nearly approaches the linear distribution of the final period of the transient and thereby reduces the magnitudes of the standing wave oscillations.

In practice, the highest voltage differentials between winding coils 28 are observed during the initial, capacitive distribution portion of the transient. The addition of shield 50 greatly reduces these differentials by distributing the initial transient voltage farther into the primary winding 22. The maximum coil-to-ground voltage is observed during the transition period as having a magnitude approximately 25% higher than the maximum line terminal voltage and located at approximately the center coil 28 of the primary winding 22. The addition of the shield 50 reduces the maximum coil-to-ground voltage. The maximum voltage also occurs at the line lead with a more nearly linear distribution through the winding.

Figure 6 presents an idealized theoretical circuit model of the toroidal transformer 10 employing two separate shields 50. Each shield is electrically connected via wire 51 to the line lead 52 of its adjacent semitoroidal segment.

From the above description, it will be apparent that the invention disclosed herein provides a novel and advantageous apparatus for providing voltage transient protection for toroidal transformers. As will be understood by those familiar with the art, the invention may be embodied in other specific forms without departing from the spirit or essential characteristics thereof. Accordingly, the disclosure of the present invention is intended to be illustrative, but not limiting, of the scope of the invention, which is set forth in the following claims.

What is claimed is:

1.    An apparatus for protecting a toroidal transformer from dielectric stresses due to applied voltage transients, the toroidal transformer having an outer winding defining an outer surface thereof, said apparatus comprising:

a conductive shield disposed adjacent the outer surface of the toroidal transformer;

insulating means for electrically insulating said conductive shield from the outer surface of the toroidal transformer; and

means for electrically connecting said conductive shield to a line lead of the outer winding of the toroidal transformer.

2.    An apparatus as recited in claim 1 wherein said insulating means is an electrically insulating barrier which extends beyond the perimeter of said conductive shield.

3.    An apparatus for protecting the outer windings of a toroidal transformer having two semitoroidal segments of outer windings connected in series as recited in claim 1 wherein said conductive shield includes first and second conductive shields each electrically coupled to a line lead of the outer windings and each disposed around and insulated from the periphery of a segment of the outer windings.

4.    An apparatus as recited in claim 3 further comprising first and second grounding plates each disposed adjacent to and insulated from one of said first and second conductive shields and each being substantially coextensive with its adjacent conductive shield.

5. An apparatus as recited in claim 1 further comprising a grounding plate disposed around and insulated from the periphery of said conductive shield.

6. An apparatus as recited in claim 5 wherein said conductive shield is insulated from said grounding plate by electrically insulating means which extends beyond the perimeter of said conductive shield.

7. A method for installing a transient voltage protection apparatus onto a toroidal transformer, said method comprising the steps of:

installing an electrically conductive shield around and insulated from the periphery of said toroidal transformer; and

electrically coupling said conductive shield to a line lead of the toroidal transformer.

8. A method for installing a transient voltage protection apparatus onto a toroidal transformer to protect the outer windings of the toroidal transformer from damage due to applied voltage transients as recited in claim 7 wherein said step of electrically coupling includes electrically coupling said conductive shield to a line lead of the outer windings of the toroidal transformer.

9. A method as recited in claim 7 further comprising the step of installing an electrically insulating barrier around and contacting the periphery of the toroidal transformer prior to said step of installing an electrically conductive shield.

10. A method as recited in claim 7 wherein said step of installing an electrically conductive shield includes installing a shield of metallic foil having an insulative layer attached to the inner surface thereof.

FIG.__1.

FIG.__2.

FIG.__3.

FIG.__4.

FIG.__5.

FIG.__6.